# EUROPEAN PATENT SPECIFICATION

(11) **EP 3 629 224 B1**
(45) Date of publication and mention of the grant of the patent: **21.06.2023**
(21) Application number: 19209443.1
(22) Date of filing: 05.10.2017
(51) Int. Cl.: G06K 7/10

(54) **MOBILE IMAGING BARCODE SCANNER**
MOBILER BILDGEBENDER BARCODESCANNER
LECTEUR DE CODE À BARRES PAR IMAGERIE MOBILE

(30) Priority: 12.10.2016 CN 201610889181; 18.10.2016 US 201615296611
(43) Date of publication of application: 01.04.2020
(62) Divisional of application: 17195085.0
(73) Proprietor: Hand Held Products, Inc., Fort Mill, SC 29707 (US)
(72) Inventor: FENG, Chen, Morris Plains, NJ 07950 (US); XIAN, Tao, Morris Plains, NJ 07950 (US); REN, Jie, Morris Plains, NJ 07950 (US); POLONIEWICZ, Paul, Morris Plains, NJ 07950 (US)
(74) Representative: Haseltine Lake Kempner LLP

(56) References cited:
- US-A1- 2006 133 757
- US-A1- 2007 091 332
- US-A1- 2011 008 035
- US-A1- 2012 002 957

## Description

### FIELD OF THE INVENTION

The present invention relates to the field of indicia readers, and more specifically, to improvements in illumination capability of the indicia reader for a size restricted mobile computer device to allow reading of direct product marking (DPM) barcodes.

### BACKGROUND

Generally speaking mobile imaging barcode scanner with limited scanner module dimensions suffers from illumination related barcode scan difficulties. As the typical scanner illuminator has close proximity to the imaging lens, strong specular reflection can contaminate the image especially for highly reflective barcode. Direct product marking (DPM) type of barcode with metallic or laminated material are commonly adopted in the industry. For this kind of barcode application, mobile imaging barcode scanners show poor performance as compared with traditional imaging scanners. Dedicated DPM imaging scanner approaches, such as dome shape illuminator and ring shape dark field illuminator, cannot be directly applied to the mobile imaging barcode scanner due to the space requirement.

With the introduction of slim mobile data terminal types of barcode scanners there is a need to provide DPM barcode scanning solution for the front end mount imaging scanner module.
United States Patent Application Publication No. US 20120002957 describes a method for producing diffuse light for lighting product markings, using a dome-shaped diffuser, a beam splitter and LEDs at different angles.
United States Patent Application Publication No. US 20110008035 describes an illuminator having both dark field and bright field capability, using a curved reflector, a light pipe and interior and exterior light sources.
United States Patent Application Publication No. US 20070091332 describes an imaging system that uses different colours of light for bright field, dark field and diffuse illumination, to capture simultaneous images in one imager that can then be separated by colour to produce separate images.
United States Patent Application Publication No. US 20060133757 describes using diffuse light from a tapered diffuser in combination with low angle dark field light from a light pipe surrounding the diffuser.

### SUMMARY

The invention is set out in the independent claims.

Accordingly, in one aspect, the present invention embraces performance and size improvements in indicia readers that provide for the integration of a mobile image scanner in a size restricted mobile computer device, such as a slim mobile data terminal or a smart mobile phone, and provide for the ability for the indicia reader to read direct product marking (DPM) type of barcodes. The improvements include the incorporation of an illumination module or bar that can generate dark field and bright field illumination. The illumination module can be designed to match the front end of a smart mobile phone and maintain a low profile design. Symmetric arranged multi-field, multi-color illuminator with close-up corrective lens and near coaxial aimer optics provide illumination and aiming support for the DPM scanning. The improvements allow the indicia reader, assembled in a slim mobile data terminal, to read direct product marking (DPM) type of barcodes.

In an exemplary embodiment, an indicia-reading apparatus (e.g., an indicia-reading module) can comprise an illumination module, that provides dark field illumination and bright field illumination, and an image scanner module. The illumination module is proximate to the image scanner module and integrated in a mobile computer device. The illuminated module can be mounted to the image scanner module.

The illumination module can comprise a first and a second dark field multi-color LED (e.g., a tri-color LED) and a first and second bright field multi-color LED (e.g., a tri-color LED); a first and a second end dark field light block; a close-up corrective lens; an first and second diffuser. The first dark field multi-color LED and the first end dark field light block are proximate to one end of the illumination module, and the second dark field multi-color LED and the second end dark field light block are proximate to another end of the illumination module.

The first and the second bright field multi-color LED are each: 1) proximate to a center of the illumination module and adjacent to a close-up corrective lens that is positioned in the center of the illumination module, and 2) proximate to a diffuser that diffuses light emitted by the first and the second bright field multi-color LED.

A first and a second dark field multi-color LED (e.g., a tri-color LED) and the first and the second dark field multi-color LED (e.g., a tri-color LED) can provide a high incident angle light for the dark field illumination to prevent specular reflection entering an imaging lens field of view. The first and second bright field multi-color LED and the first and second diffuser provide a low incident angle light with large area diffuser to minimized specular reflection disturbance in a bright field illumination.

The close-up corrective lens can provide imaging for near range reading. The illumination module can further comprise two aimer mirrors in proximity to the close-up corrective lens to provide a near-coaxial aimer for providing code alignment. The dark field multi-color LED and the bright field multi-color LED can be programmable to achieve the best contrast with the best illumination spectrum for specific object.

The first dark field multi-color LED and the first bright field multi-color LED are mounted on a first LED module, and the second dark field multi-color LED and the second bright field multi-color LED can be mounted on a second LED module, and wherein, the first LED module can be mounted on one side of the illumination module and the second LED module can be mounted on an other side of the illumination module, with the close-up corrective lens positioned between the first and second LED module.

In another exemplary embodiment, an illumination module can comprise a first and a second dark field multi-color LED for illuminating dark fields; a first and a second end dark field light blocks. The first and the second dark field multi-color LED provide high incidence angle dark field illumination to prevent specular reflection entering an imaging lens field of view. The first and the second end dark field light block reduce illumination and reflection in the illumination module. The illumination and reflections can be unwanted illumination and reflections.

The illumination module can further comprise a first and a second bright field multi-color LED (e.g., tri-color LEDs) for illuminating bright fields; a first and second diffuser that are positioned to diffuse the light emitted from the first and the second bright field multi-color LED, respectively; and a close-up corrective lens that is positioned in the center of illumination module, between the first and the second bright field multi-color LED. The first and the second bright field multi-color LED, provide a low incident angle light and the first and the second diffuser to minimized specular reflection disturbance in a bright field illumination. That is, the first and second diffuser diffuses the bright field illumination.

The illumination module can further comprise two aimer mirrors in proximity to the close-up corrective lens to provide a near-coaxial aimer for providing code alignment. The illumination module is proximate to an image scanner module. The illumination module and image scanner module are integrated in a smart mobile phone. Imaging scanning includes scanning direct product marking (DPM) type barcodes.

In yet another exemplary embodiment, a mobile data terminal can comprise an illumination module that provides dark field illumination and bright field illumination; an image scanner module, and a smart mobile phone. The illumination module can be proximate to the image scanner module and can be integrated in a smart mobile phone. The integration of the illumination module and the image scanner module supports thin mobile phone edge mount applications

The illumination module can comprise: a clear bezel to mechanically support the components as well as optically support illumination, aimer and lens functions, two multi-color LEDs (e.g., tri-color LEDs) that provide edge illumination sources for dark field illumination, two multi-color LEDs (e.g., tri-color LEDs) that provide front illumination sources for bright field illumination, two light diffuser to improve uniformity of the front illumination, two aimer fold mirrors to redirect an aimer beam, and a corrective imaging lens for close-up reading.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 illustrates an exemplary embodiment of an image scanner module.
Figure 2 illustrates an exemplary embodiment of an illumination module.
Figure 3 illustrates an exemplary embodiment of an indicia-reading module comprising the integration of the image scanner module and the illumination module.
Figure 4 illustrates an exemplary embodiment of the indicia-reading module integrated in a case of a slim mobile data terminal or smart mobile phone.
Figure 5 illustrates an exemplary embodiment of a horizontal and vertical view of the illumination module.
Figure 6 illustrates an exemplary embodiment of a partially disassembled view of the illumination module.
Figure 7A illustrates dark field and bright field illumination.
Figure 7B illustrates an exemplary embodiment of the dark field and bright field illumination of the indicia-reading module.
Figure 8 illustrates an improvement in aiming accuracy provided by an exemplary embodiment of near-coaxial aimer beam fold mirrors in proximity to a close-up corrective lens.

### DETAILED DESCRIPTION

Accordingly, in one aspect, the present invention embraces improvements in indicia readers that 1) provide for the integration of a mobile image scanner in a size restricted mobile computer device, such as a slim mobile data terminal or a smart mobile phone, and 2) provide for the ability for the indicia reader to read direct product marking (DPM) type of barcodes. The improvements include the incorporation of an illumination module or bar that can generate dark field and bright field illumination. The illumination module can be designed to match the front end of a smart mobile phone and maintain a low profile design. Symmetric arranged multi-field, multi-color illuminator with close-up corrective lens and near coaxial aimer optics provide illumination and aiming support for the DPM scanning. The improvements allow the indicia reader, assembled in a slim mobile data terminal, to read direct product marking (DPM) type of barcodes.

As previously discussed, the typical scanner module illuminator, having close proximity to an imaging lens, can generate a strong specular reflection that can contaminate the image especially for highly reflective barcode such as direct product marking (DPM) type of barcode with metallic or laminated material. For this kind of barcode application, typical mobile imaging barcode scanners show poor performance than traditional imaging scanners. Dedicated DPM imaging scanner approaches cannot be directly applied to the mobile imaging barcode scanner due to the space requirement.

A barcode reader (or barcode scanner) can be an electronic device that can read and output the data of a printed barcodes to a computer. It can include of a light source, a lens, and a light sensor translating optical impulses into electrical pulses. Barcode readers can contain decoder circuitry that analyzes the barcode's image data provided by the sensor and sends the barcode's content to the scanner's output port.

A barcode can be used to encode information in a visual pattern readable by a machine. Barcodes can be used for a variety of reasons including tracking products, prices, and stock levels for centralized recording in a computer software system. There are two types of barcodes - linear and 2D.

Most barcode scanners can include three different parts: the illumination system, the sensor, and the decoder. In general, a barcode scanner "scans" black and white elements of a barcode by illuminating the code with a light, which is then converted into matching text. More specifically, the sensor in the barcode scanner can detect the reflected light from the illumination system and generate a sensor stream reflecting the captured image of the barcode. The sensor stream is sent to the decoder. The decoder processes the frames of the sensor stream, validates the barcode, and coverts it into text. This converted text can be delivered by the scanner to a computer software system holding a database of the maker, cost, and quantity of products sold.

### Direct part marking (DPM)

DPM barcode scanners and mobile computers are equipped with imagers capable of reading barcodes that are etched or imprinted directly into the surface of materials such as plastic and metal.

DPM tags are in essence Datamatrix (or QR) symbols directly marked onto a substrate (metal, rubber, glass, etc.). There are many marking technologies to choose from (e.g. mechanical drilling / hammering / laser etching / chemical etching / sand-blasting / mold casting / stenciling etc.) depending on substrate type, cost, and the level of durability that can be desired. Unlike paper-based barcodes (i.e. printed on plain paper and usually printed with black ink/thermal on white backgrounds) DPM barcodes can be tricky to scan, for several reasons including reflectance from the substrate and lack of contrast between the actual marks and the said substrate. Often times these marks can even appear completely "washed-out" to the casual observer. Another peculiarity of DPM barcodes is that the barcode can be made of an assortment of dots which can be clearly non-contiguous with each other, or be overlapped to some degree; these marks are usually referred to as "dot-peen" when made of recessed circular dots.

As defined herein, a slim mobile data terminal is a mobile imaging barcode scanner that has the approximate shape of a slim smart mobile phone. With the improvements discussed herein, the slim mobile data terminal can provide DPM barcode scanning. The slim mobile data terminal can include an illumination module or bar integrated with a front end mount imaging scanner module. The illumination bar can be mounted to fit into a thin mobile phone edge mount application. The illumination bar matches the profile of the front of the smart mobile phone and provides a number of illumination incident angle options. The illumination module can effectively replace existing front enclosure wall of the smart mobile phone assembly structure inasmuch as the width and height of the illumination bar can be the same as the slim mobile data terminal

The dimensions of smart mobile phones in the market place can range as follows: edge thickness from approximately 5 mm to 8 mm, and widths from approximately 58 mm to 77 mm. Smart mobile phone with dimension in this range can support thin mobile phone edge mount application, and may be referred to as slim mobile data terminal. The present invention can be implemented in smart mobile phones with the aforementioned range of dimensions. However, the application of the present invention is not limited to phones/terminals with the aforementioned range of dimensions.

The width of the illumination module assembly can comprise two illumination sources positioned at the end of the illumination module that can provide high incident angle light for dark field illumination to prevent specular reflection entering the imaging lens field of view. In the middle potion of the illumination module there can be another two illumination sources that can provide low incident angle light that is diffused with large area diffuser to minimized specular reflection disturbance in the bright field illumination.

Further improvements to the slim mobile data terminal can be achieved by adding a close-up corrective lens to the illumination module to reduce the best focus object distance. The aimer pattern beam for visual alignment can also be bent very close to the imaging lens axis to minimize the off-set between aimer pattern the true effective field of view.

Other further improvements include some additional light treatments to eliminate stray light by adding light blocks to reduce unwanted illumination and reflection in the illumination module.

The illumination module can be designed to match the front end of a smart mobile phone and keep the low profile design. Symmetric arranged multi-field, multi-color illuminator with close-up corrective lens and near coaxial aimer optics provide illumination and aiming support for the DPM scanning.

The illumination module can include a clear polycarbonate bezel to mechanically support the components as well as optically support illumination, aimer and lens functions, 2 PCB's with 4 tri-color LED's that provide edge and front illumination sources, 2 light diffuser to improve uniformity of the front illumination, a pair of aimer fold mirrors to redirect the aimer beam, and the corrective imaging lens for close up reading.

In summary, the illumination module can provide the following:
1. Two end high incidence light sources for dark field illumination without any specular reflections.
2. Two area diffused front light source for bright field illumination with low specular reflections.
3. The dark field illumination and bright field illumination can be provided by programmable tri-color light source for the best contrast of the image. The tri-color LEDS can be individually activated to support various applications and options with illumination direction and spectrum selection.
4. Via a close up corrective imaging lens, an optical correction can provide the best focus distance for a small size DPM reading.
5. A pair of aimer fold mirrors that redirects the aimer beam so that it is close to the imagine lens line of sight, in order to minimize the aiming error of the small size DPM code.

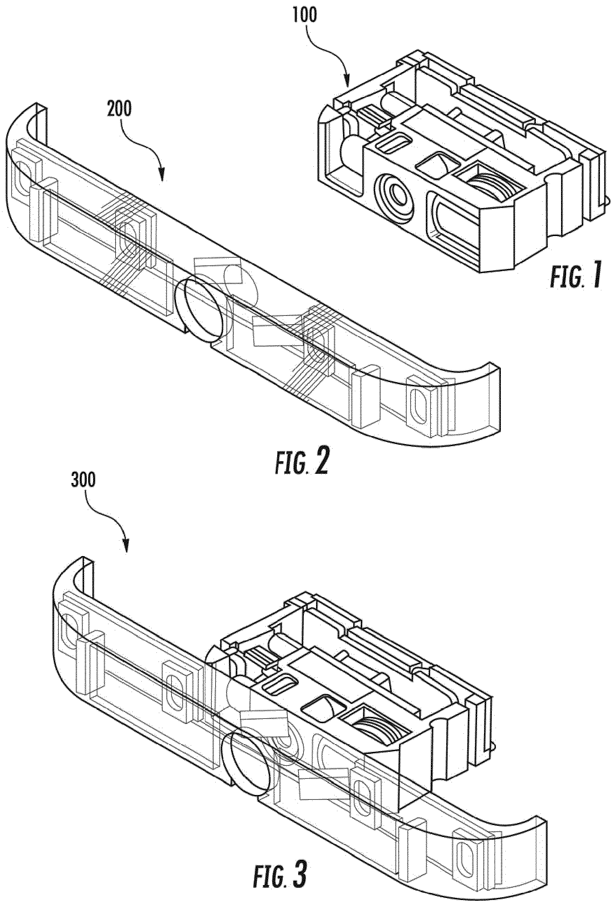

In an exemplary embodiment, Figure 1 illustrates image scanner module 100. Image scanner module 100 can be referred to as a front-end mount imaging scanner module.

In an exemplary embodiment, Figure 2 illustrates illumination module 200. Illumination module 200 can be referred to an illumination bar based on the shape of illumination module 200

In an exemplary embodiment, Figure 3 illustrates indicia-reading module 300 comprising the integration of the image scanner module 100 and the illumination module 200.

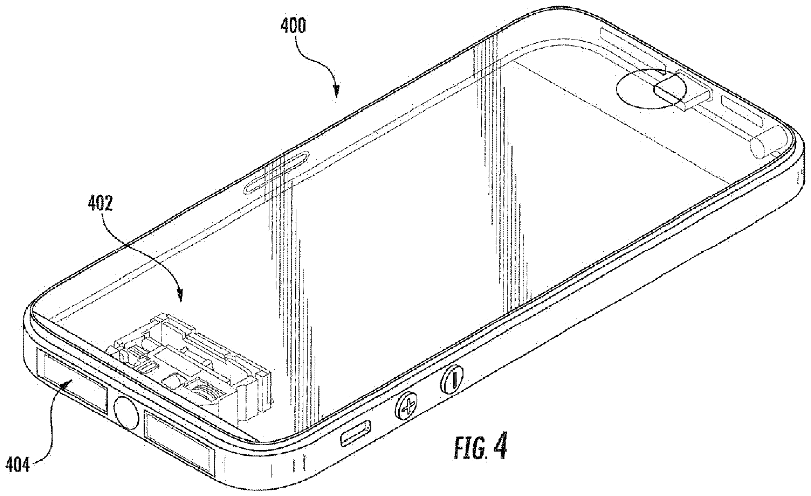

In an exemplary embodiment, Figure 4 illustrates a slim mobile data terminal 400 comprising indicia-reading module 404 integrated in the case 402 of the slim mobile data terminal 400. Case 402 can have a thin mobile phone edge mount structure. As illustrated, the front of the indicia-reading module 404 fits into the front of the slim mobile data terminal 400. Slim mobile data terminal 400 can support DPM barcode scanning.

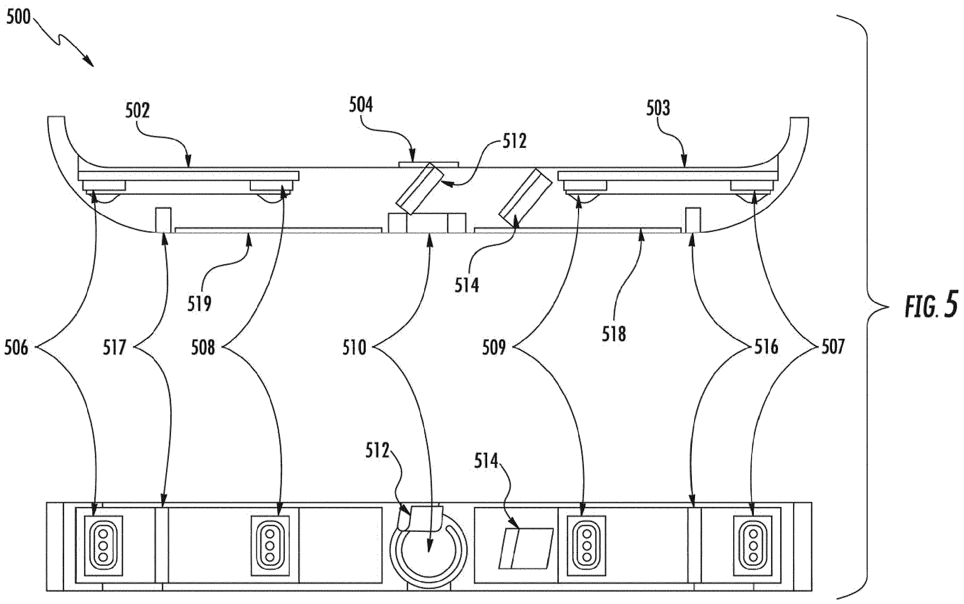

Figure 5 illustrates a horizontal and vertical view 500 of illumination module 200. Figure 5 illustrates: a first and second LED module 502 and 503, respectively; a slim imager lens bore fitting (boss) 504; a first and second LED for end dark light illumination, 506 and 507, respectively; a first and second color LED for front bright light illumination, 508 and 509, respectively; a close-up corrective lens 510; a first and second near-coaxial aimer beam fold mirrors, 512 and 514, respectively; a first and second end dark field light block, 516 and 517, respectively; a first and second diffuser, 518 and 519, respectively.

The close-up corrective lens 510 is an imaging lens. The slim imager lens bore fitting 504 is positioned with precise alignment. The plurality of LEDs can be tri-color LEDs. Tri-color LEDs can be programmable and can provide improved contrast compared with traditional mobile scanners. The LED modules can be circuit boards.

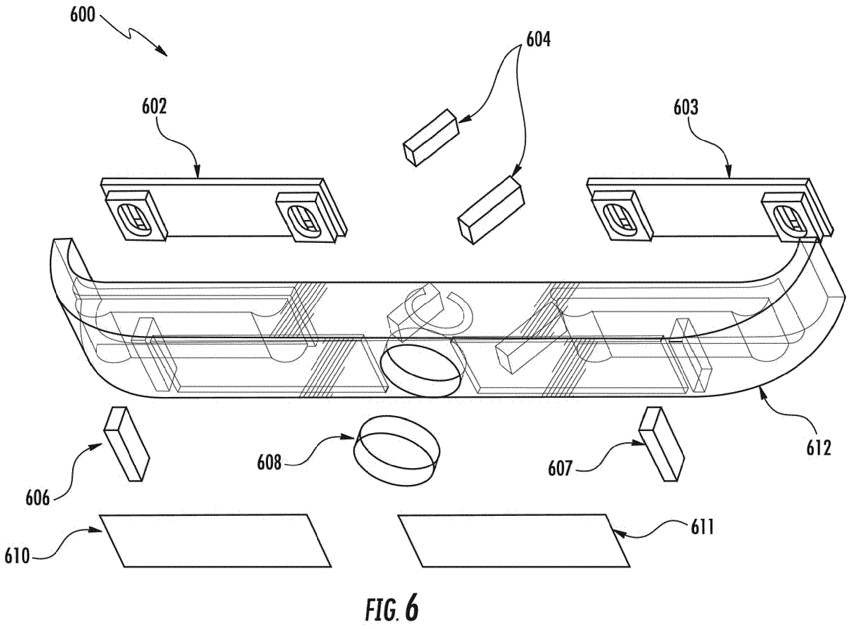

In an exemplary embodiment, Figure 6 illustrates a partially disassembled view 600 of the illumination module 200. Figure 6 illustrates: a first and second LED module, 602 and 603, respectively; two near-coaxial aimer beam fold mirrors, 604; a first and second end dark field light block, 606 and 607, respectively; a close-up corrective lens 608; a first and second diffuser, 610 and 611, respectively. The close-up corrective lens 608 can provide for near range reading. The illumination module can comprise an optically clear bezel 612. The component described herein can fit into the optically clear bezel 612.

Bright field illumination is commonly used in optics. In this mode, light directly striking the surface is reflected based on the sample's composition and topography.

Dark field illumination is a tool for viewing particles, edges, or other changes occurring on a sample's surface. With this process, the center of the light cone can be blocked allowing only light scattering along the surface at a high incident angle to illuminate the field of view.

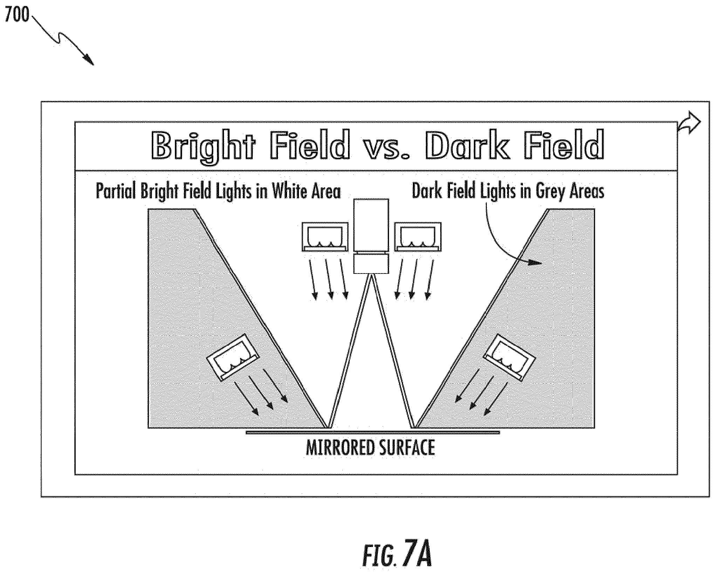

Figure 7A, embodiment 700, illustrates the relationships between a dark field and a bright field. Light reflections are based on the principle that the angle of incidence equals the angle of reflection. Figure 7A illustrates dark field that is generated by dark field lights in the grey areas, and bright field that is generated by bright field lights in the white areas. When imaging from a mirrored surface, the presence of light in bright field on a shiny surface will be viewed from camera. The presence of lighting in dark field will not be viewed from camera.

As shown in Figure 7A, a bright field light source emits beams of light that can have a low incident angle relative to the field of view. As illustrated, the field of view is a mirrored surface. The subsequent reflection generates a bright field that is viewed by the camera.

A dark field light source emits beams of light that can have a high incident angle relative to the field of view. The subsequent reflection does not appear in the bright field area. Rather, the dark field light source can generate dark fields.

The collection of light sources having a low incident angle relative to the field of view and light sources having a high incident angle relative to the field of view a "W" in illumination geometry, as illustrated in Figure 7A. At a critical incident angle relative to the field of view, a border between the dark field and bright field is created. The areas that are outside of the "W" are a dark field, and the areas that are inside the "W" are a bright field.

Effective application of dark field lighting relies on the fact that much of the light incident on a mirrored surface in the field of view, that would otherwise flood the scene as a hot spot glare, is reflected away from, rather than toward a close-up corrective lens. The relatively small amount of light that is reflected back into the camera is what happens to catch an edge of a small feature on the surface, satisfying the "angle of reflection equals the angle of incidence" equation.

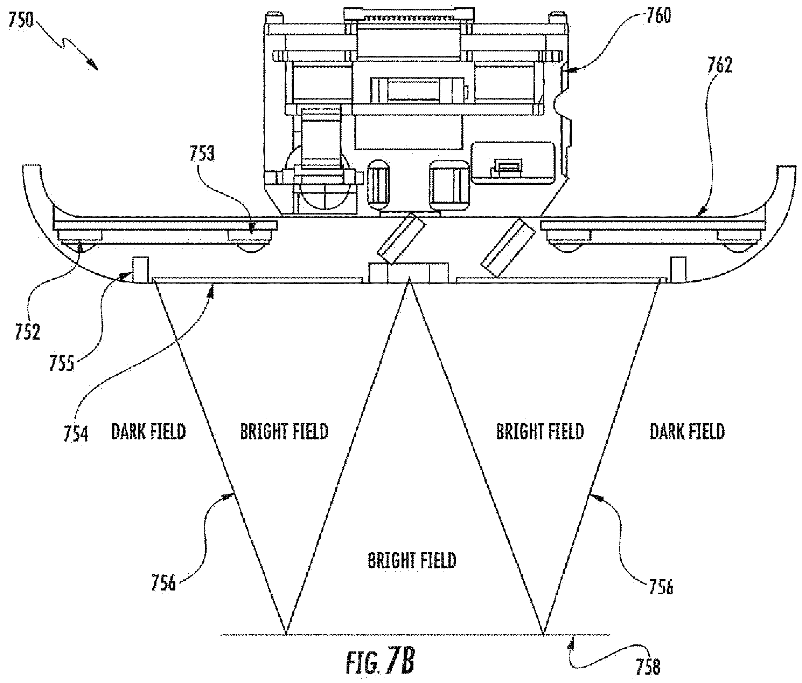

In an exemplary embodiment, Figure 7B illustrates dark field and bright field illumination of indicia-reading module 750. Indicia-reading module 750 can comprise image scanner module 760 and illumination module 762. LED 752 can be the source of the dark field illumination. LED 753 can be the source of the bright field illumination. End dark field light block 755 can eliminate undesired illumination and reflection in the illumination module. The diffuser 754 diffuses the light from LED 753. The collective pattern resulting from the dark field illumination and the bright field illumination is illustrated by the dark field boundary 756. The result can be distinctive areas of dark field and bright field illumination.

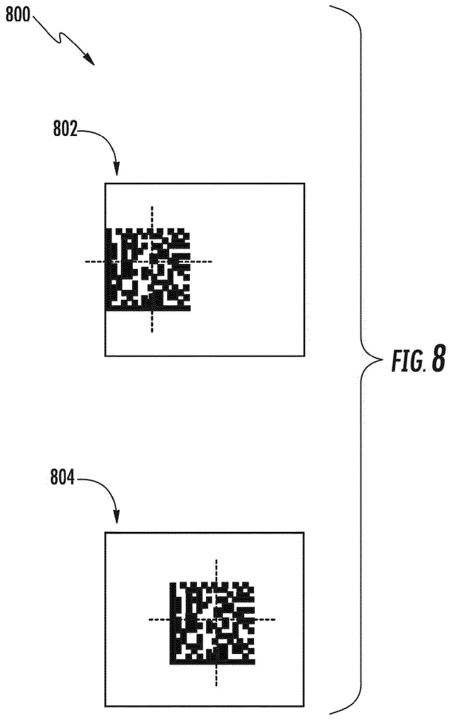

In an exemplary embodiment, Figure 8 illustrates improvement in aiming accuracy provided by an exemplary embodiment of two near-coaxial aimer beam fold mirrors in proximity to a close-up corrective lens. Figure 8, aimer pattern 802 illustrates an aimer pattern that is not in the center of the image field of view. The slim imager aimer can have an off-set that can create alignment errors, causing scanning errors. The near-coaxial aimer beam fold mirrors can effectively create a periscope. Accordingly, the aimer pattern can be re-directed to provide better alignment, per Figure 8, aimer pattern 804. The close-up corrective lens 608 provides further improvement by shifting the best focus distance closer to the image.

The illumination module 200 can provide:
- Two-end high incidence angle dark field illumination
- Two-area diffused front bright field illumination
- Close-up corrective lens for near range reading
- Near-coaxial aimer for better small code alignment
- Programmable tri-color illumination for the best contrast

## Claims

1. An illumination module (200, 500), comprising:
a first dark field multi-color LED (506) and a second dark field multi-color LED (507), wherein the first dark field multi-color LED (506) and the second dark field multi-color LED (507) provide high incidence angle dark field illumination;
a first bright field multi-color LED (508) and a second bright field multi-color LED (509);
a first LED module (502) and a second LED module (503); and
a close-up corrective lens (510); **characterized in that** the illumination module further comprises a first end dark field light block (516) and a second end dark field light block (517), wherein the first end dark field light block (516) and the second end dark field light block (517) reduces illumination and reflection in the illumination module (200, 500);
wherein the first dark field multi-color LED (506) and the first bright field multi-color LED (508) are mounted on the first LED module (502), and the second dark field multi-color LED and the second bright field multi-color LED are mounted on the second LED module (503), and wherein the first LED module (502) is mounted on one side of the illumination module (200, 500) and the second LED module (503) is mounted on another side of the illumination module (200, 500), with the close-up corrective lens (510) positioned between the first LED module (502) and the second LED module (503); and
wherein the first dark field multi-color LED (506) and the first end dark field light block (516) are proximate to one end of the illumination module (200, 500), and the second dark field multi-color LED and the second end dark field light block are proximate to another end of the illumination module (200, 500).

2. The illumination module (200, 500) according to claim 1, further comprising:
a first diffuser (518) and a second diffuser (519) that are positioned to diffuse light emitted from the first bright field multi-color LED (508) and the second bright field multi-color LED (509), respectively;
the close-up corrective lens (510) positioned in a center of the illumination module (200, 500), between the first bright field multi-color LED (508) and the second bright field multi-color LED (509),
wherein the first bright field multi-color LED (508) and the second bright field multi-color LED (509) provide a low incident angle light and the first diffuser (518) and the second diffuser (519) diffuse the bright field illumination.

3. The illumination module (200, 500) according to claim 1 or 2, comprising two aimer mirrors (512, 514) in proximity to the close-up corrective lens (510).

4. The illumination module (200, 500) according to any of the preceding claims, wherein, the illumination module (200, 500) is proximate to an image scanner module (100) and the illumination module (200, 500) and image scanner module (100) are integrated in a smart mobile phone.

5. The illumination module (200, 500) according to any of the preceding claims, wherein, imaging scanning includes scanning direct product marking (DPM) type barcodes.

6. A mobile data terminal (400), comprising:
an image scanner module (100); and
an illumination module (200, 500) that provides dark field illumination and bright field illumination, wherein the illumination module (200, 500) comprises:
a first dark field multi-color LED (506) and a second dark field multi-color LED (507) to provide edge illumination sources for dark field illumination;
a first bright field multi-color LED (508) and a second bright field multi-color LED (509) to provide front illumination sources for bright field illumination;
a first LED module (502) and a second LED module (503);
a close-up corrective lens (510);
**characterized in that**
the first dark field multi-color LED (506) and the first bright field multi-color LED (508) are mounted on the first LED module (502), and the second dark field multi-color LED and the second bright field multi-color LED are mounted on the second LED module (503); and
the first LED module (502) is mounted on one side of the illumination module (200, 500) and the second LED module (503) is mounted on another side of the illumination module (200, 500), with the close-up corrective lens (510) positioned between the first LED module (502) and the second LED module (503), wherein the illumination module (200, 500) is proximate to the image scanner module (100).

7. The mobile data terminal (400) according to claim 6, wherein the integration of the illumination module (200, 500) and the image scanner module (100) supports thin mobile phone edge mount applications.

8. The mobile data terminal (400) according to claim 6 or 7, wherein the illumination module (200, 500) further comprises:
a clear bezel (612) to mechanically support components as well as optically support illumination, aiming, and lens functions;
two light diffusers (518, 519) to improve uniformity of the front illumination; and
two aiming fold mirrors (512, 514) to redirect an aiming beam.

9. The mobile data terminal (400) according to any of claims 6 to 8, wherein the illumination module (200, 500) and the image scanner module (100) are integrated in the mobile data terminal (400).

## Patentansprüche

1. Beleuchtungsmodul (200, 500), umfassend:
eine erste Mehrfarben-Dunkelfeld-LED (506) und eine zweite Mehrfarben-Dunkelfeld-LED (507), wobei die erste Mehrfarben-Dunkelfeld-LED (506) und die zweite Mehrfarben-Dunkelfeld-LED (507) Dunkelfeldbeleuchtung mit hohem Einfallswinkel bereitstellen;
eine erste Mehrfarben-Hellfeld-LED (508) und eine zweite Mehrfarben-Hellfeld-LED (509);
ein erstes LED-Modul (502) und ein zweites LED-Modul (503); und
eine Nahkorrekturlinse (510);
**dadurch gekennzeichnet, dass** das Beleuchtungsmodul ferner einen ersten End-Dunkelfeldlichtblock (516) und einen zweiten End-Dunkelfeldlichtblock (517) umfasst, wobei der erste End-Dunkelfeldlichtblock (516) und der zweite End-Dunkelfeldlichtblock (517) Beleuchtung und Reflexion in dem Beleuchtungsmodul (200, 500) verringern;
wobei die erste Mehrfarben-Dunkelfeld-LED (506) und die erste Mehrfarben-Hellfeld-LED (508) an dem ersten LED-Modul (502) montiert sind und die zweite Mehrfarben-Dunkelfeld-LED und die zweite Mehrfarben-Hellfeld-LED an dem zweiten LED-Modul (503) montiert sind, und wobei das erste LED-Modul (502) an einer Seite des Beleuchtungsmoduls (200, 500) montiert ist und das zweite LED-Modul (503) an einer weiteren Seite des Beleuchtungsmoduls (200, 500) montiert ist, wobei die Nahkorrekturlinse (510) zwischen dem ersten LED-Modul (502) und dem zweiten LED-Modul (503) positioniert ist; und
wobei sich die erste Mehrfarben-Dunkelfeld-LED (506) und der erste End-Dunkelfeldlichtblock (516) in der Nähe eines Endes des Beleuchtungsmoduls (200, 500) befinden und die zweite Mehrfarben-Dunkelfeld-LED und die zweite End-Dunkelfeldlichtblock sich in der Nähe eines weiteren Endes des Beleuchtungsmoduls (200, 500) befinden.

2. Beleuchtungsmodul (200, 500) nach Anspruch 1, ferner umfassend:
einen ersten Diffusor (518) und einen zweiten Diffusor (519), die positioniert sind, um Licht zu streuen, das aus der ersten Mehrfarben-Hellfeld-LED (508) beziehungsweise der zweiten Mehrfarben-Hellfeld-LED (509) emittiert wird;
die Nahkorrekturlinse (510), die in einer Mitte des Beleuchtungsmoduls (200, 500) zwischen der ersten Mehrfarben-Hellfeld-LED (508) und der zweiten Mehrfarben-Hellfeld-LED (509) positioniert ist,
wobei die erste Mehrfarben-Hellfeld-LED (508) und die zweite Mehrfarben-Hellfeld-LED (509) ein Licht mit niedrigem Einfallswinkel bereitstellen und der erste Diffusor (518) und der zweite Diffusor (519) die Hellfeldbeleuchtung streuen.

3. Beleuchtungsmodul (200, 500) nach Anspruch 1 oder 2, umfassend zwei Zielspiegel (512, 514) in der Nähe der Nahkorrekturlinse (510).

4. Beleuchtungsmodul (200, 500) nach einem der vorhergehenden Ansprüche, wobei sich das Beleuchtungsmodul (200, 500) in der Nähe eines Bildscannermoduls (100) befindet und das Beleuchtungsmodul (200, 500) und das Bildscannermodul (100) in einem Smartphone integriert sind.

5. Beleuchtungsmodul (200, 500) nach einem der vorhergehenden Ansprüche, wobei das bildgebende Scannen ein Scannen von Barcodes zur direkten Teilekennzeichnung (DPM-Barcodes) (DPM = direct product marking) umfasst.

6. Mobiles Datenendgerät (400), umfassend:
ein Bildscannermodul (100); und
ein Beleuchtungsmodul (200, 500), das Dunkelfeldbeleuchtung und Hellfeldbeleuchtung bereitstellt, wobei das Beleuchtungsmodul (200, 500) umfasst:
eine erste Mehrfarben-Dunkelfeld-LED (506) und eine zweite Mehrfarben-Dunkelfeld-LED (507), um Randbeleuchtungsquellen für eine Dunkelfeldbeleuchtung bereitzustellen;
eine erste Mehrfarben-Hellfeld-LED (508) und eine zweite Mehrfarben-Hellfeld-LED (509), um Vorderseitenbeleuchtungsquellen für eine Hellfeldbeleuchtung bereitzustellen;
ein erstes LED-Modul (502) und ein zweites LED-Modul (503);
eine Nahkorrekturlinse (510);
**dadurch gekennzeichnet, dass**
die erste Mehrfarben-Dunkelfeld-LED (506) und die erste Mehrfarben-Hellfeld-LED (508) an dem ersten LED-Modul (502) montiert sind und die zweite Mehrfarben-Dunkelfeld-LED und die zweite Mehrfarben-Hellfeld-LED an dem zweiten LED-Modul (503) montiert sind; und
das erste LED-Modul (502) an einer Seite des Beleuchtungsmoduls (200, 500) montiert ist und das zweite LED-Modul (503) an einer weiteren Seite des Beleuchtungsmoduls (200, 500) montiert ist, wobei die Nahkorrekturlinse (510) zwischen dem ersten LED-Modul (502) und dem zweiten LED-Modul (503) positioniert ist, wobei sich das Beleuchtungsmodul (200, 500) in der Nähe des Bildscannermoduls (100) befindet.

7. Mobiles Datenendgerät (400) nach Anspruch 6, wobei die Integration des Beleuchtungsmoduls (200, 500) und des Bildscannermoduls (100) Montageanwendungen für Mobiltelefone mit dünnen Rändern unterstützt.

8. Mobiles Datenendgerät (400) nach Anspruch 6 oder 7, wobei das Beleuchtungsmodul (200, 500) ferner umfasst:
eine durchsichtige Einfassung (612) zum mechanischen Stützen von Komponenten sowie zum optischen Stützen von Beleuchtungs-, Ziel- und Linsenfunktionen;
zwei Lichtdiffusoren (518, 519) zum Verbessern der Gleichmäßigkeit der Vorderseitenbeleuchtung; und
zwei Zielklappspiegel (512, 514), um einen Zielstrahl umzulenken.

9. Mobiles Datenendgerät (400) nach einem der Ansprüche 6 bis 8, wobei das Beleuchtungsmodul (200, 500) und das Bildscannermodul (100) in das mobile Datenendgerät (400) integriert sind.

## Revendications

1. Module d'éclairage (200, 500), comprenant :
une première DEL multicolore en champ sombre (506) et une seconde DEL multicolore en champ sombre (507), dans lequel la première DEL multicolore en champ sombre (506) et la seconde DEL multicolore en champ sombre (507) fournissent un éclairage en champ sombre à angle d'incidence élevé ;
une première DEL multicolore en champ clair (508) et une seconde DEL multicolore en champ clair (509) ;
un premier module DEL (502) et un second module DEL (503) ; et
un objectif correcteur de gros plan (510) ;
**caractérisé en ce que** le module d'éclairage comprend en outre un premier bloc de lumière en champ sombre d'extrémité (516) et un second bloc de lumière en champ sombre d'extrémité (517), le premier bloc de lumière en champ sombre d'extrémité (516) et le second bloc de lumière en champ sombre d'extrémité (517) réduisant l'éclairage et la réflexion dans le module d'éclairage (200, 500) ;
dans lequel la première DEL multicolore en champ sombre (506) et la première DEL multicolore en champ clair (508) sont montées sur le premier module DEL (502), et la seconde DEL multicolore en champ sombre et la seconde DEL multicolore en champ clair sont montées sur le second module DEL (503), et dans lequel le premier module DEL (502) est monté sur un côté du module d'éclairage (200, 500) et le second module DEL (503) est monté sur un autre côté du module d'éclairage (200, 500), l'objectif correcteur de gros plan (510) étant positionné entre le premier module DEL (502) et le second module DEL (503) ; et
dans lequel la première DEL multicolore en champ sombre (506) et le premier bloc de lumière en champ sombre d'extrémité (516) sont proches d'une extrémité du module d'éclairage (200, 500), et la seconde DEL multicolore en champ sombre et le second bloc de lumière en champ sombre d'extrémité sont proches d'une autre extrémité du module d'éclairage (200, 500).

2. Module d'éclairage (200, 500) selon la revendication 1, comprenant en outre :
un premier diffuseur (518) et un second diffuseur (519) qui sont positionnés pour diffuser la lumière émise de la première DEL multicolore en champ clair (508) et de la seconde DEL multicolore en champ clair (509), respectivement ;
l'objectif correcteur de gros plan (510) positionné au centre du module d'éclairage (200, 500), entre la première DEL multicolore en champ clair (508) et la seconde DEL multicolore en champ clair (509),
dans lequel la première DEL multicolore en champ clair (508) et la seconde DEL multicolore en champ clair (509) fournissent une lumière à faible angle d'incidence et le premier diffuseur (518) et le second diffuseur (519) diffusent l'éclairage en champ clair.

3. Module d'éclairage (200, 500) selon la revendication 1 ou 2, comprenant deux miroirs de visée (512, 514) à proximité de l'objectif correcteur de gros plan (510).

4. Module d'éclairage (200, 500) selon l'une quelconque des revendications précédentes, dans lequel, le module d'éclairage (200, 500) est proche d'un module lecteur d'image (100) et le module d'éclairage (200, 500) et le module lecteur d'image (100) sont intégrés dans un téléphone mobile intelligent.

5. Module d'éclairage (200, 500) selon l'une quelconque des revendications précédentes, dans lequel, la lecture par imagerie comprend la lecture de codes à barres de type marquage direct de produit (DPM).

6. Terminal de données mobile (400), comprenant :
un module lecteur d'image (100) ; et
un module d'éclairage (200, 500) qui fournit un éclairage en champ sombre et un éclairage en champ clair, dans lequel le module d'éclairage (200, 500) comprend :
une première DEL multicolore en champ sombre (506) et une seconde DEL multicolore en champ sombre (507) pour fournir des sources d'éclairage périphérique pour un éclairage en champ sombre ;
une première DEL multicolore en champ clair (508) et une seconde DEL multicolore en champ clair (509) pour fournir des sources d'éclairage avant pour un éclairage en champ clair ;
un premier module DEL (502) et un second module DEL (503) ;
un objectif correcteur de gros plan (510) ;
**caractérisé en ce que**
la première DEL multicolore en champ sombre (506) et la première DEL multicolore en champ clair (508) sont montées sur le premier module DEL (502), et la seconde DEL multicolore en champ sombre et la seconde DEL multicolore en champ clair sont montées sur le second module DEL (503) ; et
le premier module DEL (502) est monté sur un côté du module d'éclairage (200, 500) et le second module DEL (503) est monté sur un autre côté du module d'éclairage (200, 500), l'objectif correcteur de gros plan (510) étant positionné entre le premier module DEL (502) et le second module DEL (503), dans lequel le module d'éclairage (200, 500) est proche du module lecteur d'image (100).

7. Terminal de données mobile (400) selon la revendication 6, dans lequel l'intégration du module d'éclairage (200, 500) et du module lecteur d'image (100) prend en charge des applications de montage périphérique de téléphone mobile mince.

8. Terminal de données mobile (400) selon la revendication 6 ou 7, dans lequel le module d'éclairage (200, 500) comprend en outre :
un cadre transparent (612) pour supporter mécaniquement des éléments constitutifs ainsi que pour prendre en charge optiquement les fonctions d'éclairage, de visée et d'objectif ;
deux diffuseurs de lumière (518, 519) pour améliorer l'uniformité de l'éclairage avant ; et
deux miroirs de repliement de visée (512, 514) pour rediriger un faisceau de visée.

9. Terminal de données mobile (400) selon l'une quelconque des revendications 6 à 8, dans lequel le module d'éclairage (200, 500) et le module lecteur d'images (100) sont intégrés dans le terminal de données mobile (400).
